(19) Europäisches Patentamt

European Patent Office

Office européen des brevets

(11) **EP 1 619 255 A1**

(12) **EUROPEAN PATENT APPLICATION**

(43) Date of publication:
**25.01.2006 Bulletin 2006/04**

(21) Application number: **04019377.3**

(22) Date of filing: **16.08.2004**

(51) Int Cl.:
*C12P 7/10* (2006.01)    *C12P 7/06* (2006.01)
*B01D 3/00* (2006.01)    *C02F 1/04* (2006.01)
*C12G 3/12* (2006.01)

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **14.07.2004 ES 200401723**

(71) Applicant: **Garcia Moreno, Angel
46988 Paterna (Valencia) (ES)**

(72) Inventor: **Garcia Moreno, Angel
46988 Paterna (Valencia) (ES)**

(74) Representative: **Isern-Jara, Nuria
Avda. Diagonal, 463 Bis 2
08036 Barcelona (ES)**

(54) **Installation and procedure for the evaporation of waste waters and/or tails applicable in distillation processes taking advantage of the calorific energy of the reflux condenser**

(57)    It comprises a procedure and an installation for the evaporation of the waste waters or glue products in the distillation processes, taking advantage of the calorific energy lost at the water outlet to the condensers (3) of the distilling equipment (1), the procedure being based on the use of an evaporator (6) of the waste water or glue products from a single or multiple action low vacuum distillation equipment, taking advantage of the hot water from the condenser outlet of the distillation equipment as the calorific energy to produce the evaporation, with a low consumption of external calorific energy and a lower production cost.

**Description**

OBJECT OF THE INVENTION

The object of the present invention is an evaporation procedure for waste waters and/or glue products in the distillation process and an installation that uses such a procedure that includes appreciable innovations and advantages in comparison with other distillation processes known within the industry.

BACKGROUND TO THE INVENTION

At the present time, the distillation processes known in the industry are based on subjecting a liquid to be distilled to an evaporation process, in a continuous or discontinuous manner, with columns of plates, bubble caps, or systems of filling or either by the use of simple stills, obtaining the products that have a lower boiling point at the top where the auxiliary condensation systems are located, and where the products that have a higher boiling point are obtained at the bottom or lower part, for example, from the distillation columns or distillation containers.
When the liquid to be distilled, such as is the case of alcohol distillers, contain appreciable amounts of water, the glue products coming from the distillation with waste waters cause a significant environmental pollution if they are not suitably treated.
In the chemical and pharmaceutical industries, the glue products can be very varied, it being advantageous in certain occasions to carry out a complementary evaporation to concentrate the waste products. In many distilleries they also use evaporators for the waste waters of the distillation equipment as a depuration system obtaining evaporated waters, that are reusable in the manufacturing process and concentrating the soluble solids for their subsequent use in agriculture or the food industry.
In whichever of the previous cases, the evaporators connected to the treatment of glue products or waste waters of the distillation equipment consume large amounts of calorific energy despite using multiple effect evaporation systems, which reduce said consumption, even though the greater the number of evaporation effects the greater the investment cost and also the electricity costs to make them work are greater.
In the previously described processes, the vapours that exit from the distillers are introduced into the condensation system, such as for example, tubular bundles or heat exchangers by "plates", circulating on the inside of the tubes or through a section of the plates the cooling water while on the outside of said tubes or either through another section of the plates the vapours circulate that contain the products that it is required to be separated by distillation.
In these condensation systems, the vapours lose their calorific energy and are condensed (turning into a liquid state), in such a way that as the liquids are returned to the distillation columns forming a normal system within the state of the art known as backflow system, for the purpose of attaining a greater concentration of volatile substances. In these still processes the liquid exiting from the condensers can reach the required concentration and it is considered as an already distilled product in such a way that it then passes to a cooling phase.

DESCRIPTION OF THE INVENTION

This present invention has been developed for the purpose of providing a procedure and installation for the evaporation of waste waters and/or glue products that uses the procedure to solve the previously stated disadvantages, moreover providing other additional advantages that will be evident from the description that is given below.
The procedure for the evaporation of waste waters and/or glue products applicable to distillation processes taking advantage of the calorific energy lost in the outlet of the cooling fluid of the present invention, is characterised by the fact that it includes the following steps:

a) It carries a flow of the fluid to be distilled from the inlet through a primary pre-heater via some pipes;
b) It carries a flow of the fluid to be distilled coming from the said primary pre-heater towards a second heater via some pipes;
c) It carries a flow of the fluid to be distilled coming from said second heater towards the interior of a column or similar tank on the inside of which an exchange of temperatures takes place between the upper and lower area;
d) To obtain a distilled product from the flow of fluid of the column in the upper part of the columns, a waste product at the lower part that is at a higher temperature than the distilled product and that is driven to the second heater and vapours of the product to be distilled;
e) To drive the vapours previously obtained towards the vapour condenser that has cooling fluid inlet at a lower temperature than said vapour in such a way that the condensed vapour is circulated once again towards the column while the lower temperature cooling fluid is driven to an evaporator;
f) To drive said cooling fluid coming from the evaporator towards the first pre-heater in such a way that it carries out a first heating phase to the flow of the fluid to be distilled; and

is also characterised by the fact that the waste product is simultaneously driven to the second heater that due to its greater temperature heats the flow of the fluid to be distilled in a second phase, said waste product being subsequently driven to the evaporator in such a way that as a result of the heating carried out by the higher temperature of the cooling fluid, said waste product is evaporated.

Thanks to these characteristics, an advantageous applicable procedure is obtained, for example, for byproducts of the wine industry to distil wine and lees (the remains left at the bottom of the wine fermentation vats) that allow a concentration of the substances that are soluble in the waste waters or glue products likewise a depuration by evaporation of said waste waters by means of distillation with a low cost operations.

The invention procedure allows achievement of the depuration of waste waters or glue products from the distillation equipment by evaporation of same obtaining clean evaporated water and a concentrated soluble solids for their use in agriculture, all of this with low calorific energy or even without the consumption of external calorific energy if the waste water evaporator is designed with a suitable number of effects.

In accordance with another aspect of the invention, an installation is claimed to carry out a procedure for the evaporation of waste waters and/or glue products applicable to the distillation processes taking advantage of the calorific energy lost at the outlet of the cooling fluid, which is characterised by the fact that it has a distillation column that is connected by means of pipes to a pre-heater, a heater connected by means of pipes to said pre-heater, condensation equipment connected to a distillation column by means of pipes forming a closed circuit for the vapour coming from the column that subsequently returns to said condenser column, evaporation equipment connected by means of pipes to the pre-heater and the condenser, and a tank for the extraction of the vapours coming from the evaporator.

By preference the condensation equipment for the installation will have a condenser.

Alternatively, the condensation equipment is made up of two or more condensers arranged in series with a large surface area for the thermal exchange, in such a way that the amount of water necessary to produce the condensation of the vapours is reduced and the temperature of same is increased to a temperature approaching the temperature of the vapours which it is required to condense.

By preference, the evaporation equipment is made up of a low single effect low range vacuum evaporator.

Another object of the present invention is to provide condensation equipment that includes a degasification bottle or for connection to the outside atmosphere.

In accordance with another aspect of the invention, the evaporation equipment is made up of a low single effect low range vacuum evaporator.

In accordance with another embodiment of the installation of the present invention, the installation includes condensation equipment made up of two condensers in series connected to a distillation column that internally includes a great number of plates, a cooling device connected to the distillation column and to the condensation equipment, a pre-heater and a heater connected to the distillation column, having provided a propeller pump connected to the heater and said column, at least two cooling towers, one of which is connected to the pre-heater while the other is connected to a third condenser that includes a collector bottle at the outlet, a number of pumps for the pumping of the fluids arranged at the outlets of the cooling towers and an evaporator connected to the pre-heater.

Other characteristics and advantages of the procedure and the installation object of the present patent will be evident from the description of the preferred embodiment, but are not exclusive, they are illustrated in the drawings that are attached which are by way of example but not limiting, in which:

BRIEF DESCRIPTION OF THE DRAWINGS

Figure 1.- It is an outline view of a distillation equipment corresponding to the state of the art.
Figure 2.- It is an outline view of the distillation equipment used in the evaporation procedure for waste water and/or glue products according to the present invention.
Figure 3.- It is an outline view of an industrial application for wine distillation that operates by means of the invention procedure, and
Figure 4.- It is an outline view of another embodiment of a distillation installation.

DESCRIPTION OF A PREFERRED EMBODIMENT

Example 1

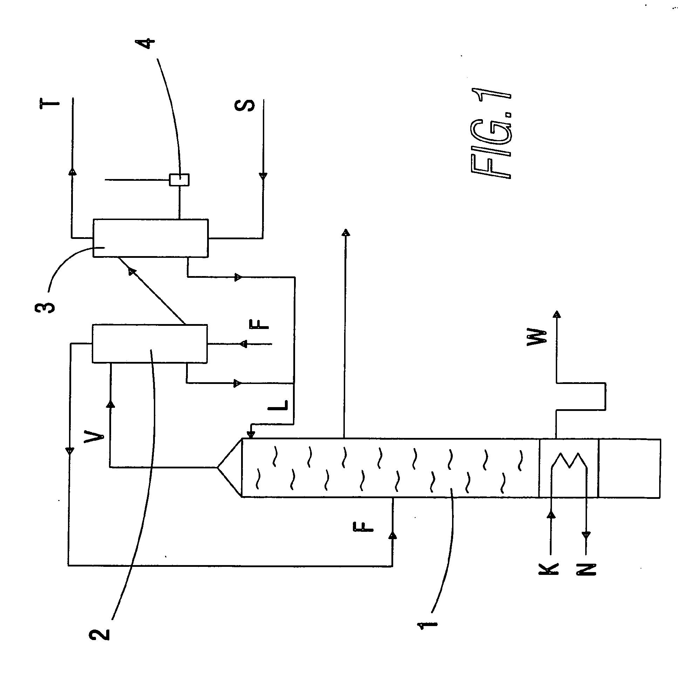

In Figure 1 an arrangement is shown that corresponds to a conventional distillation process for wine. Below are some data corresponding to the balances of materials and energy as an example that starts from the following initial data:

Flow of wine to be distilled: 10,000 litres per hour
Alcohol content of the wine to be distilled: 10° (10% of alcohol by volume)
Entry temperature of the wine: 20°C
Alcohol obtained: 1,053 l/h at 95° (860 Kg/h)
Temperature of cold water in the condensers: 30°C

In the following the balances of material and energy are established from the previous data in regard to the operation of the installation of Figure 1:

Material Balance

$\Sigma$ entries = $\Sigma$ exits
Entries: F + K + L
Exits: V + D + W + N
Relation of backflow: L/D = 5
Equivalent Values:
V=L
K = N

Therefore, substituting and simplifying the balance:

$$F \; + \; \cancel{K} \; + \; \cancel{L} \; = \; \cancel{L} \; + \; D \; + \; W \; + \; \cancel{K}$$

$$F \; = \; D \; + \; W,$$

which means;

$$9{,}900 \; Kg/h \; = \; 860 \; Kg/h \; + \; W$$

$$W \; = \; 9{,}040 \; Kg/h$$

$$V \; = \; L \; = \; D \; x \; 5 \; = \; 860 \; Kg/h \; x \; 5 \; = \; 4{,}300 \; Kg/h$$

Enthalpic Balance

$\Sigma$ entries = $\Sigma$ exits
Entries:
F (feed at 10°)

$$QF=9{,}900 \; Kg/h \; x \; 1.06 \; Kcal/Kg \; °C \; x \; 70°C=734{,}580 \; Kcal/h$$

**4**

L (backflow at 95°)

$$QL=4,300 \text{ Kg/h} \times 0.65 \text{ Kcal/Kg } °C \times 80°C=223,600 \text{ Kcal/h}$$

K (steam entry at 5Kg/cm$^2$)

$$QK = K \text{ (Kg/h)} \times 659.5 \text{ Kcal/Kg}$$

Exits:
V (alcoholic vapours at 95°)

$$QV = 4,300 \text{ Kg/h} \times 291 \text{ Kcal/Kg} = 1251300 \text{ Kcal/h}$$

D (distilled alcohol at 95°)

$$QD = 860 \text{ Kg/h} \times 0.65 \text{ Kcal/Kg } °C \times 80°C = 44720 \text{ Kcal/h}$$

W (waste water)

$$QW = 9040 \text{ Kg/h} \times 1 \text{ Kcal/Kg } °C \times 103°C = 931120 \text{ Kcal/h}$$

N (condensed vapour)

$$QN = N \text{ (Kg/h)} \times 1 \text{ Kcal/Kg } °C \times 103 °C$$

In this way, by substituting and simplifying the balance, the following is obtained:

$$QF + QL + QK = QV + QD + QW + QN$$

$$734580+223600+659.5 \times K=1251300 + 44720 + 931120 + 103 \times K$$

$$553 \times K = 1268960$$

$$K = N = 2295 \text{ Kg/h}$$

Working of the pre-heating of the feed:

Enthalpy used in pre-heating the feed

$$Q=9900\text{Kg/h} \times 1.06 \text{ Kcal/Kg} \times (70°C-20°C)=524700 \text{ Kcal/h}$$

Working of the vapour condensers:

Enthalpy that exits from the pre-heater and reaches the condenser

$$Q = 1251300 \text{ Kcal/h} - 524700 \text{ Kcal} = 726600 \text{ Kcal/h}$$

In this way the water flow cooling water necessary will be:

$$Q = M \times Cp \times \Delta T$$

$$726000 \text{ Kcal/h} - 223600 \text{ Kcal/h} = M \times 1 \text{ Kcal/Kg } °C \times (50°C - 30°C)$$

$$M = 25120 \text{ Kg/h}$$

The working of the evaporator is achieved by means of coupling a vacuum pump, liquid ring in the evaporator condenser, being able to reach a boiling temperature in the evaporator of 50°C. Therefore, in this system as the exit temperature from the condenser of the distillation equipment is 50°C there is no thermal jump that can be taken advantage of in the evaporation. However, if the enthalpy in the waste waters is taken advantage of that exit from distiller equipment and go into the evaporator 9,040 Kg/h at 103 °C, generating an evaporation by difference of enthalpy of the waste water from the inlet to the evaporator in regard to the boiling point of same, the quantity of water being evaporated that would be produced of:

$$W = 9040 \text{ Kg/h} \times 1 \text{ Kcal/Kg } °C \times (103 °C - 50°C) = 479120 \text{ Kcal/h}$$

In this way the evaporation will be:

$$479120 \text{ Kcal/h} / 570 \text{ Kcal/Kg} = 840.60 \text{ Kg/h}$$

Example 2

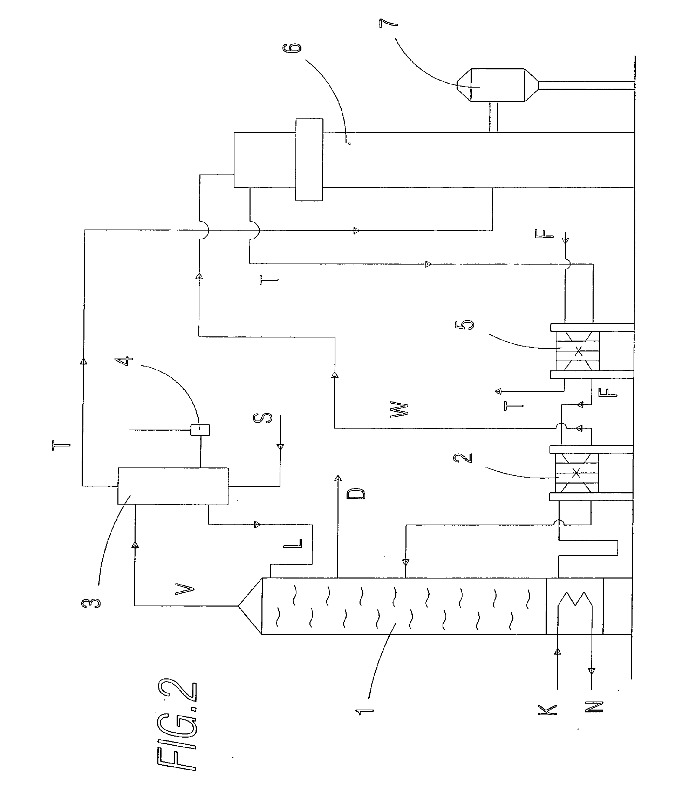

In example 2 the same material and energy balances calculations are carried out starting from the initial data as in the above example but in this case it is carried out by means of the procedure of the present invention that corresponds to Figure 2 represented.
In the following the material and energy balances are established corresponding to the plant shown in figure 2:

Material Balance

Σ entries = Σ exits
Entries: F + K + L
Exits = V + D + W + N
Relation of backflow: L/D = b
Equivalent Values:
V=L
K = N

Therefore, substituting and simplifying the balance:

$$F + \cancel{K} + \cancel{L} = \cancel{L} + D + W + \cancel{K}$$

$$F = D + W,$$

which means;

$$9,900 \; Kg/h = 860 \; Kg/h + W$$

$$W = 9,040 \; Kg/h$$

Enthalpic Balance

Σ entries = Σ exits
Entries:
F (feed at 10°)

$$QF = 9,900 \; Kg/h \times 1.06 \; Kcal/Kg \; °C \times 93°C = 975,942 \; Kcal/h$$

L (backflow at 95°)

$$QL = L \; (Kg/h) \times 0.65 \; Kcal/Kg \; °C \times 80°C = 52 \times L$$

K (steam entry at 5Kg/cm²)

$$QK = 2295 \; Kg/h \times 659.5 \; Kcal/Kg = 1513553 \; Kcal/h$$

Exits:
V (alcoholic vapours at 95°)

$$QV = V \; (Kg/h) \times 291 \; Kcal/Kg = 291 \times V$$

D (distilled alcohol at 95°)

$$QD = 860 \; Kg/h \times 0.65 \; Kcal/Kg \; °C \times 80°C = 44720 \; Kcal/h$$

W (waste water)

$$QW = 9040 \; Kg/h \times 1 \; Kcal/Kg \; °C \times 103°C = 931120 \; Kcal/h$$

N (condensed vapour)

$$QN = 2295 \ (Kg/h) \ x \ 1 \ Kcal \ / \ Kg \ °C \ x \ 103 \ °C = 236385 \ Kcal/h$$

In this way, by substituting and simplifying the balance, the following is obtained:

$$QF + QL + QK = QV + QD + QW + QN$$

$$975942 + 52xL + 1513553 = 291 \ x \ L + 44720 + 931120 + 236385$$

$$239 \ x \ L = 1277270$$

$$L = V = 5344 \ Kg/h$$

In this way the relationship of backflow will be:

$$L \ / \ D = 2344/860 = 6.21$$

Working of the pre-heating of the feed:

Enthalpy used in pre-heating the feed (F)

$$Q=9900 \ Kg/h \ x \ 1.06 \ Kcal/Kg \ x \ (93°C \ -20°C) = 766062 \ Kcal/h$$

Working of the vapour condensers:

$$QV = 5344 \ Kg/h \ x \ 291 \ Kcal/kg = 1555104 \ Kcal/h$$

$$QL = 5344 \ Kg/h \ x \ 0.65 \ Kcal/Kg \ °C \ x \ 80°C = 277888 \ Kcal/h$$

In this way the cooling water flow water necessary will be:

$$Q=QV - QL=1555 \ x \ 100 \ Kcal/h \ - \ 277888 \ Kcal/h=1277216 \ Kcal/$$

$$Q = m \ X \ Cp \ x \ \Delta T$$

$$1277216 \ Kcal/h = M \ x \ 1 \ Kcal/Kg \ °C \ x \ (79°C-30°C)$$

$$M = 26066 \text{ Kg/h}$$

Establishing the same working conditions for the evaporator as in Example 1, this meaning, single effect under a low vacuum scheme with a boiling point temperature of 50ª, using the water exiting from the distillation equipment condenser outlet as the heating fluid 26066 Kg/h at 79°C. The evaporation surface is calculated to take advantage of the maximum enthalpy possible from the heating fluid the water being able to exit from the evaporator at 52°C, therefore, the enthalpy used in the evaporation will be:

$$QA=26066 \text{ Kg/h x } 1 \text{ Kcal/Kg °C x } (79°C - 30°C)=703782 \text{ Kcal/h}$$

The evaporator water outlet (at 52 °C) is used to pre-heat the feed (F) for the distiller equipment in the pre-heater (5) by means of thermal exchange with feed (F) for the distiller equipment (990 Kg/h at 20 °C) calculating the surface of the pre-heater (5) to heat (F) up to 48 °C.
Therefore, the enthalpy contributed to (F) will be:

$$QP5=9900 \text{ Kg/h x } 1.06 \text{ Kcal/Kg°C x } (48°C-20°C)=293832 \text{ Kcal/h}$$

$$293832 \text{ Kcal/h } = 26066 \text{ Kg/h x } 1 \text{ Kcal/Kg °C x } (52 °C - ts)$$

ts = 40.73°C, which corresponds to the outlet temperature T that is driven to the cooling tower).
The distiller equipment feed (F) in the pre-heater (5) at 48 °C is introduced into the heater (2) to finish off heating the feed by thermal exchange with the flow of waste waters (W) that exits from the distilling column (9040 Kg/h at 103 °C) calculating the heater surface (2) to heat (F) up to 93°C.
The enthalpy contributed to (F) will be:

$$QP2=9900 \text{ Kg/h x } 1.06 \text{ Kcal/Kg°C x } (93°C-48°C)=472230 \text{ Kcal/h}$$

$$472230 \text{ Kcal/h } = 9040 \text{ Kg/h x } 1 \text{ Kcal/Kg °C x } (103 °C - tw)$$

tw = 50.8°C, (temperature of the waste waters (W) exiting from the heater (2) and is introduced into the evaporator (6)).
As "W" enters the evaporator (6) practically at the same boiling point temperature no additional evaporation will take place in the evaporator (6).
Because of this, the total evaporation from the evaporator (6) will be:

$$703782 \text{ Kcal/h } / 570\text{Kcal/Kg } = 1234 \text{ Kg/h}$$

This means an increase in evaporation compared to the previous example 1 of 1.47.
It is worth mentioning that in the comparative study of the examples 1 and 2 that have started with a single column for distillation and one single action evaporator column connected for the evaporation of the waste waters from distillation, dealing with a more simple model, object of the invention, although with the process of the invention advantage can be taken of the calorific energy coming from the cooling waters from several distillation towers which work simultaneously likewise using double action or multiple action evaporation processes, in this way achieving an increase in the evaporation capacity from the procedure object of the invention.

List of reference numbers corresponding to Figures 1 and 2

   1. Distillation column
   2. Heater
   3. Condenser
   4. Atmospheric bottle connection
   5. Pre-heater
   6. Evaporator
   7. Evaporated water outlet device

Example 3

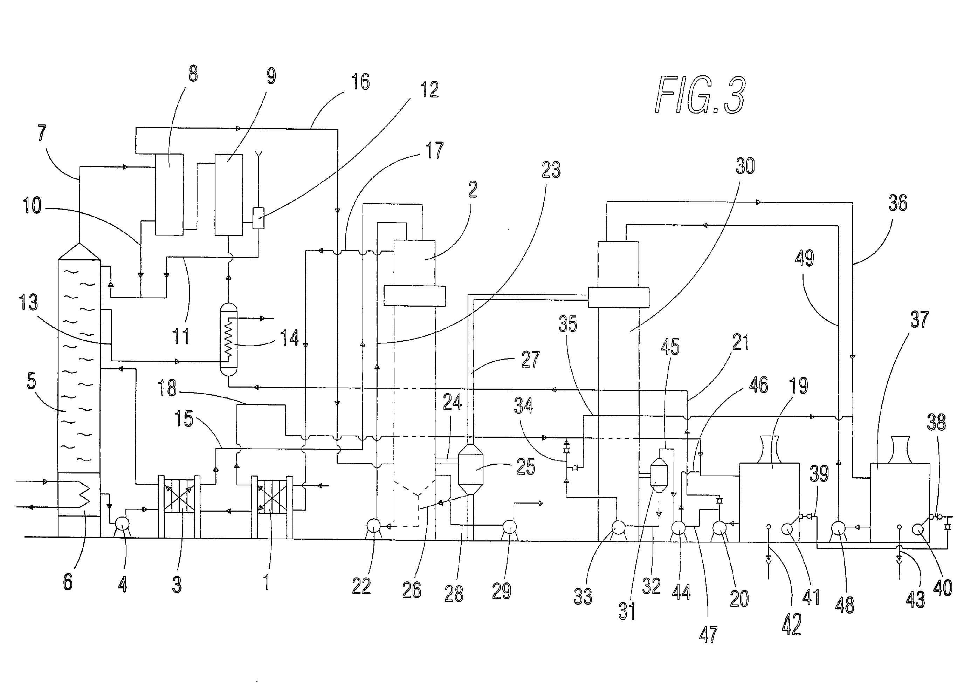

In Figure 3 an installation can be appreciated using the procedure of the above described invention that uses a single distillation column at atmospheric pressure and a single action evaporator under a vacuum scheme to evaporate the waste waters coming from the distillation process and which is described below:

In the fist place, the product to be distilled is introduced by means of a propeller pump in the first pre-heater (1) where the first heating takes place by convection with the heating water outlet of the evaporation chamber (2). The pre-heated product is introduced into a second heater (3) where the heating is finished by means of waste distillation waters which are pumped by the process pump (4). The product to be distilled, which is hot, is introduced in a feed plate of the distilling column (5), dropping plate by plate, along the inside against the current with the vapour drag, losing its content of light substances (those with a lower boiling point) along its journey until reaching the base of the column (6) where it is subjected to strong boiling by the action of the indirect heating system, with vapour, generating the drag vapour that rises in the distillation column and giving off the volatile substances, the vapours exiting together with the volatile substances by the vapour tubes (7).

Next such vapours are driven to the condensation equipment, said equipment being made up of two condensers (8) and (9), where the vapours are condensed by means of thermal exchange with the cooling water. Next the liquid resulting from the vapour condensation returns to the distillation column (5) at the top by means of the pipes (10) and (11),forming the so-called backflow.

Subsequently, the distilled product is removed by means of several plates below the backflow inlet for the purpose of depuration the uncondensed gases that are evacuated to the atmosphere via the degasification bottle (12).

The distilled product comes out in hot liquid form via tube (13) and is driven to the cooler (14), being of the coil type, then to some storage tanks.

The heating system of the distillation column (5) of the installation is connected at the base (6) of said column (5), in this case being considered as indirect vapour, which means, without direct contact with the liquid, in such a way that the vapour gives up its enthalpy to the liquid through a heating surface and is condensed, the hot condensed vapour exiting to return to the water steam generator feed tank, in this way taking advantage of its enthalpy, which reduces the fuel consumption of said generator.

The waste waters that exit at the base (6) of the distillation column (5), are aspirated by the pump (4) and are pumped to the heat exchanger (3) where they are partially cooled by the thermal exchange with the product to be distilled, the waste waters exiting through the pipe (15) and driven to the upper part of the evaporation chamber (2), being in this case, of the descending film tubular beam type. The waste water falls on the inside of the pipes in the form of a film, the hot water exiting from the condenser (8) that exits by the pipe (16) circulating on the exterior. The hot water gives up its enthalpy to the liquid, which is evaporated in the evaporation chamber (2) and exits through the pipe (17) that next passes through the pre-heater (1) where it cools once again, in such a way that it gives up its enthalpy to the product to be distilled. Then, the waste water exits from the pre-heater (1) by the pipe (18) and is finally carried to a cooling tower (19) where it cools by direct contact with the atmospheric air. Once cooled the waste water returns by means of the help of the pump (20) to the cooling circuit by the pipe (21).

In order to achieve a uniform bath in all the heating pipes of the evaporator (2), the pump (22) aspirates the waste water from the base of the evaporator that pushes it through the pipe (23) to the head of same.

The evaporated water in the evaporator (2) together with a small portion of liquid dragged pass along the pipe (24) towards the separation device (25) where the liquid dragged is separated from the evaporated water, the stated liquid returning to the evaporation circuit by the pipe (26) while the evaporated water (in a gassy state) exits by the pipe (27).

On the other hand, the waste water concentrated in soluble solids exits from the evaporator (2) by the pipe (28), this concentrated liquid being aspirated by the pump (29) in such a way that it pushes it to a tank (not shown) for its subsequent industrialised processing or direct sale.

The water evaporated from the waste waters that exits from the pipe (27) is introduced by the exterior of the condenser pipes (30), where it is liquefied by thermal exchange with the cooling water, which circulates on the inside of the condensation pipes. The condensate from the depurated water passes to the collector bottle (31) and is taken by the pipe (32) to the aspiration of the pump (33) which subsequently pushes it along the pipe (34) to the pipe (18) along which the water circulates from the exit of the cooling circuit that is taken to the cooling tower (19). In this way, the evaporated water coming from the waste waters is used to replace the evaporation losses from the cooling tower (19).As the volume of evaporated water is greater than volume of the replacement water from the cooling tower (19), the evaporated water outlet circuit has two valves, being able to exit by the pipe (35) and subsequently to the pipe (36) that leads the outlet water from the condenser cooling circuit (30) over the cooling tower (37) in such a way that the evaporated water is also used to replace the water lost by evaporation in the cooling tower (37). Both cooling towers (19) and (37) have water network inlets (38) and (39) connected to level switches of the float valves (40) and (41) in order to proceed to the initial circuit filling phase. The outlet of excess evaporated water that exits from the cooling towers (19) and (37) takes place through the pipes (42) and (43) which are connected with outlets to the drain for their subsequent disposal or collection for their use in other industrial processes.

In order to achieve the evaporation of the waste water at low temperature a liquid ring vacuum pump (44) is fitted that aspirates the air from the evaporation system through the pipe (45) and pushes the water together with the air extracted by means of the pipe (46) that is connected with the pipe (18) that feeds the water to the cooling tower (19). The water necessary for the working of the vacuum pump (44) is supplied through the pipe (47).

The condenser (30) cooling water is supplied by the pump (48) that pushes the water along the pipe (49) to the inside of the condenser pipes, the hot water exiting from the pipe (36) and going to the cooling tower (37).

It is worth mentioning that the object of the invention can be applied to other fields of the art, such as food, chemical or pharmaceutical which use distillation equipment in their industrial processes and where there is an interest in concentration by evaporation, of waste waters or glue products that exit from same.

The details, the ways, the dimensions and other accessorial elements, in addition to the materials used in the manufacturing procedure and installation of the invention can be, advantageously substituted by others that are technically equivalent and which do not deviate from the essence of the invention or from the scope defined in the claims that are included subsequently.

Example 4

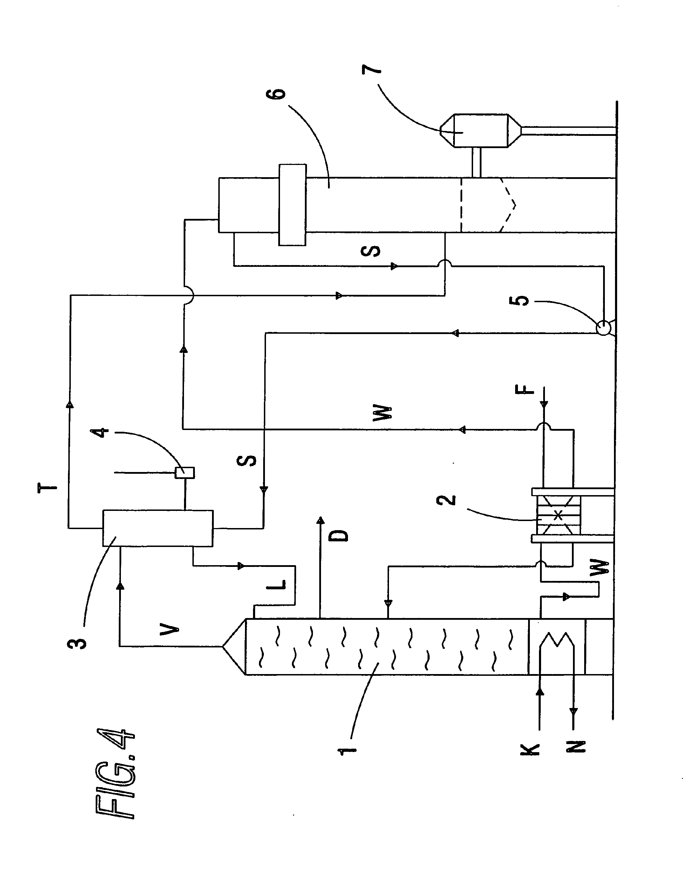

In this variation, which corresponds to the installation shown in figure 4, the exiting cooling fluid (T) which exits from the condensation system (3) is driven to the evaporation system (6) giving up its calorific energy to the glue products (W) that are evaporated, in this process the cooling fluid is cooled on exiting through the pipe (S), once again driven by means of a pump (5) to the condensation system (3) of the distiller equipment (1). In this way, a closed circuit is established with the cooling fluid, achieving maximum advantage for the calorific yield.

In effect, in the calculations corresponding to Figure 2, the flow T (cooling fluid) to the plate exchange (5) outlet has a temperature of 40.73 °C, being taken to the cooling tower for final cooling down to 30 °C in order to be used again in the condenser (3) of the distillation equipment as fluid "S", but in this process part of the calorific energy is lost in the cooling tower, being the cooling of the cooling fluid (T) from 40.73 °C to 30°C. In the process described in Figure 4 this calorific loss does not take place, even though the cooling liquid (S) that exits from the evaporator (6) will have a temperature of 52 °C and the condenser (3) will have to have a greater condensation surface due to the fact that the cooling fluid enters at a higher temperature, logically the cooling fluid flow will also be greater on having a lesser thermal jump (79 °C - 52 °C) in comparison with the process in Figure 2 (79 °C - 30 °C).

List of references used in the three attached figures:

K.    Vapour inlet
F.    Feed
T.    cooling water outlet
W.    Waste waters
L.    Backflow
V    Vapour outlet
S.    Cooling water inlet
D.    Distilled product
N.    Condensed vapour outlet

**Claims**

1. "Process for the evaporation of waste waters and/or glue products applicable in the distillation processes taking advantage of the calorific energy lost in the outlet of the cooling fluid", **characterised in that** it includes the following steps:

a) To drive a flow of fluid to be distilled by means of a first pre-heater by means of some pipes;

b) To drive the flow of fluid to be distilled coming from said first pre-heater towards a second heater by means of some pipes;

c) To drive the flow of fluid to be distilled coming from said second heater towards the inside of at least one column or similar tank on the inside of which an exchange of temperatures takes place between the upper and lower zones;

d) To obtain a distilled product from the fluid flow from the column at the top of the column, a waste product from the bottom that is at a greater temperature than the distilled product and which is channelled to the second heater and vapours of the product to be distilled;

e) To drive the previously obtained vapours towards a piece of vapour condenser equipment that has a cooling fluid inlet at a lower temperature than said vapour in such a way that the condensed vapour is once again circulated towards the column while the lower temperature cooling fluid is driven to an evaporator;

f) To direct said cooling fluid coming from the evaporator towards the first pre-heater in such a way that it carries out a first heating phase for the flow of the fluid to be distilled; and

by the fact that the waste product is simultaneously driven to the second heater which due to its higher temperature heats the flow of the fluid to be distilled in a second phase, said waste product being subsequently driven to the evaporator in such a way that due to the heating carried out by the higher temperature of the cooling fluid, the waste product is evaporated.

2. "An installation to carry out an evaporation procedure for waste waters and/or glue products applicable to distillation processes and taking advantage of the calorific energy lost in the outlet from the cooling fluid", **characterised in that** it includes a distillation column (1) that is connected by pipes to a pre-heater (5), a heater (2) linked via pipes to said pre-heater (5), condensation equipment (3) linked to the distillation column (1) by means of pipes forming a closed circuit for the vapour (V) coming from the column (1) that subsequently returns to said column (1) condensed, evaporation equipment (6) linked by means of pipes to the pre-heater (5) and to the condensation equipment (3), and a tank (7) for the extraction of the vapours coming from the evaporator.

3. "An installation" according to claim 2, **characterised in that** the condensation equipment (3) is made up of a condenser.

4. "An installation according to claim 2, **characterised** because in that the condensation equipment (3) is made up of two or more condensers in series.

5. "An installation according to claim 2, **characterised in that** the evaporation equipment (6) is made up of a single action evaporator working in a low vacuum scheme.

6. "An installation according to claim 2, **characterised in that** the condensation equipment (3) includes a degasification bottle (4) or connection to the outside atmosphere.

7. "An installation according to claim 2, **characterised in that** the evaporation equipment (6) is made up of a single action evaporator working in a low vacuum scheme.

8. "An installation according to claim 2, **characterised in that** it includes condensation equipment made up by two condensers (8 & 9) in series connected to a distillation column (5) which has a number of plates on the inside, a cooling device (14) connected to the distillation column (5) and to the condensation equipment, a pre-heater (1) and a heater (3) connected to the distillation column (5), being fitted with a propeller pump (4) connected to the heater (3) and said column (5), by at least two cooling towers (19 & 37), one of which is connected to the pre-heater (1) while the other is connected to a third condenser (30) which has a collector bottle (31) at its outlet, a number of pumps (20, 29 & 48) fitted at the cooling tower outlets (19 & 37) for the pumping of fluids, and an evaporator (2) fitted to the pre-heater (1).

FIG.1

EP 1 619 255 A1

FIG.2

FIG.3

FIG. 4

**European Patent Office**

## EUROPEAN SEARCH REPORT

Application Number

EP 04 01 9377

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | FICARELLA A ET AL: "Energy conservation in alcohol distillery with the application of pinch technology" ENERGY CONVERSION AND MANAGEMENT, ELSEVIER SCIENCE PUBLISHERS, OXFORD, GB, vol. 40, no. 14, September 1999 (1999-09), pages 1495-1514, XP004168682 ISSN: 0196-8904 Fig. 3, ref. S21-1A/B, S21-2, C10, 23 page 1500, section 3, line 1-4 ----- | 1-8 | C12P7/10 C12P7/06 B01D3/00 C02F1/04 C12G3/12 |
| Y | US 4 952 504 A (PAVILON ET AL) 28 August 1990 (1990-08-28) drawing, ref. 42,114,G,M,R ----- | 1-8 | |
| A | US 4 503 079 A (KING ET AL) 5 March 1985 (1985-03-05) * the whole document * ----- | | |
| A | WO 81/01154 A (NEVES A) 30 April 1981 (1981-04-30) * the whole document * ----- | | TECHNICAL FIELDS SEARCHED (Int.Cl.7) C12P B01D C02F C12G |

The present search report has been drawn up for all claims

| Place of search | Date of completion of the search | Examiner |
|---|---|---|
| Munich | 25 August 2005 | Roider, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

## ANNEX TO THE EUROPEAN SEARCH REPORT
## ON EUROPEAN PATENT APPLICATION NO.

EP 04 01 9377

This annex lists the patent family members relating to the patent documents cited in the above-mentioned European search report.
The members are as contained in the European Patent Office EDP file on
The European Patent Office is in no way liable for these particulars which are merely given for the purpose of information.

25-08-2005

| Patent document cited in search report | | | Publication date | Patent family member(s) | | | Publication date |
|---|---|---|---|---|---|---|---|
| US | 4952504 | A | 28-08-1990 | US | 5135861 | A | 04-08-1992 |
| US | 4503079 | A | 05-03-1985 | NONE | | | |
| WO | 8101154 | A | 30-04-1981 | US | 4425433 | A | 10-01-1984 |
| | | | | AU | 540923 | B2 | 06-12-1984 |
| | | | | AU | 6646981 | A | 07-05-1981 |
| | | | | CA | 1168998 | A1 | 12-06-1984 |
| | | | | CA | 1179282 | A2 | 11-12-1984 |
| | | | | DK | 274481 | A | 22-06-1981 |
| | | | | EP | 0038359 | A1 | 28-10-1981 |
| | | | | IN | 156131 | A1 | 18-05-1985 |
| | | | | JP | 56501311 | T | 17-09-1981 |
| | | | | MC | 1503 | A | 17-11-1983 |
| | | | | NO | 812106 | A | 19-06-1981 |
| | | | | WO | 8101154 | A1 | 30-04-1981 |
| | | | | AR | 230456 | A1 | 30-04-1984 |
| | | | | BE | 886588 | A1 | 10-06-1981 |
| | | | | BR | 8102445 | A | 17-08-1982 |
| | | | | ES | 8207583 | A1 | 16-12-1982 |
| | | | | FI | 811222 | A | 21-04-1982 |
| | | | | GR | 75214 | A1 | 13-07-1984 |
| | | | | IT | 1210472 | B | 14-09-1989 |
| | | | | KR | 8401955 | B1 | 26-10-1984 |
| | | | | NZ | 196915 | A | 09-11-1984 |
| | | | | NZ | 207196 | A | 09-11-1984 |
| | | | | US | 4564595 | A | 14-01-1986 |

EPO FORM P0459

For more details about this annex : see Official Journal of the European Patent Office, No. 12/82